# EUROPEAN PATENT APPLICATION

(11) **EP 4 729 271 A1**
(43) Date of publication of application: **22.04.2026**
(21) Application number: 24383130.2
(22) Date of filing: 15.10.2024
(51) Int. Cl.: B29C 45/26, B29C 33/30

(54) **DEVICE AND METHOD FOR REMOVING INSERTS FROM INJECTION MOULDS**

(71) Applicant: Comercial de Utiles y Moldes, S.A., 08960 Sant Just Desvern, Barcelona (ES)
(72) Inventor: NAVARRA PRUNA, Alberto, 08960 Sant Just Desvern (Barcelona) (ES)
(74) Representative: Herrero & Asociados, S.L.

(57) **Abstract**

The device for removing inserts from injection moulds comprises a fixing sleeve (1) to which a insert (2) is fixed; a shaft (3) on which the fixing sleeve (1) is removably placed; at least one retaining element (12) which retains the fixing sleeve (1) on the shaft (3) in a retained position; a thrust sleeve (13), which is movable relative to said shaft (3), between a retention position of the fixing sleeve (1) and a releasing position of the fixing sleeve (1); and a stem (4) provided with an air inlet (5), said shaft (3) and said thrust sleeve (13) being movable relative to said stem (4) by injecting air through said air inlet (5).

It allows a mould insert to be removed and replaced quickly along the parting line of the mould, without leaving any marks on the plastic part.

## Description

### Object of the invention

The present invention relates to a device and a method of removing inserts from injection moulds.

### Background to the invention

In a mould it is necessary to periodically change some of its parts. These parts are housed in a casing, and to remove them from the casing, mechanical tools are usually used by skilled operators.

For example, one of the parts that need to be changed periodically are the inserts, which allow modifications to be made to the mould without having to make two versions of the same mould.

The replacement of these parts has the disadvantage that it requires a considerable period of time, because it involves removing the mould from the injection moulding machine, and dismantling mould plates to access the insert fixing systems, remove them and insert the insert with the required variation. All of this has an impact on mould productivity. In addition, so much handling can cause parts to accidentally fall out, which is an additional inconvenience because they can be damaged and require additional work to fix.

### Description of the invention

Therefore, an objective of the present invention is to provide a device and a method of removing inserts from injection moulds which allows removing one insert and replacing it with another insert quickly along the parting line of the mould, and without leaving any marks on the plastic part.

With the device and method for removing inserts from injection moulds of the invention, the aforementioned disadvantages are solved and there are other advantages which will be described below.

The device and method of removing inserts from injection moulds according to the present invention are described in the corresponding independent claims, and the dependent claims include additional features which are optional.

In particular, the device for removing inserts from injection moulds comprises:
- a fixing sleeve to which an insert is attached;
- a shaft on which the fixing sleeve is detachably placed;
- at least one retaining element that retains the fixing sleeve on the shaft in a retained position;
- a thrust sleeve, which is movable relative to said shaft, between a retention position of the fixing sleeve and a release position of the fixing sleeve; and
- a rod provided with an air inlet, the shaft and the thrust sleeve being movable with respect to the rod when air is injected through the air inlet.

Furthermore, the device for removing inserts from injection moulds according to the present invention also preferably comprises an intermediate sleeve which is arranged between the fixing sleeve and the shaft.

Preferably, there is a spring between the fixing sleeve and the intermediate sleeve which pushes the intermediate sleeve away from the insert.

According to a preferred embodiment, said at least one retaining element is housed in a housing of the intermediate sleeve.

Said at least one retaining element is preferably spherical in shape, i.e., in the form of a ball.

According to a preferred embodiment, the fixing sleeve comprises a cavity, which has a width that is greater at its end proximal to the insert than at its end distal to the insert.

Furthermore, said intermediate sleeve preferably comprises a protrusion, wherein said protrusion is housed inside said cavity.

In order to regulate the height position of the insert in the mould, the device for removing inserts from injection moulds according to the present invention also preferably comprises a nut located around the rod.

The method of removing inserts from injection moulds comprises the following steps:
- providing an insert in an injection mould, the insert being fixed to a fixing sleeve;
- retaining said fixing sleeve around a shaft, said shaft being fixed to the mould;
- displacing the insert and the fixing sleeve relative to the shaft by injecting air into a rod attached to the shaft so that the insert protrudes from the mould; and
- removing the insert.

Preferably, the step of moving the insert and the fixing sleeve comprises:
- displacing the insert and the fixing sleeve a first distance from the shaft;
- pressing the insert to the shaft; and
- displacing the insert and the fixing sleeve a second distance from the shaft, the second distance being greater than the first distance.

Furthermore, preferably during the displacement of the insert and the fixing sleeve the first distance, a spring between the fixing sleeve and an intermediate sleeve is compressed, and then the spring expands, moving the insert the first distance, and during the movement of the insert and the fixing sleeve the second distance, the spring is compressed again, and when the insert expands, it moves the second distance.

In addition, preferably between the displacement of said first distance of the insert and the displacement of said second distance of the insert, the fixing sleeve is retained around the shaft.

With the device and method for removing inserts from injection moulds according to the present invention, injection mould inserts can be quickly changed out of an injection mould, avoiding the use of tools.

### Brief description of the drawings

For a better understanding of what has been explained above, some drawings are included in which, schematically and only by way of a non-limiting example, a practical case of embodiment is shown.
Figure 1 is a perspective section view of the device for removing inserts from injection moulds according to the present invention;
Figures 2 and 3 are sectional views of a part of the device for removing inserts from injection moulds, showing the attachment of the fixing sleeve to the shaft; and
Figures 4 to 9 are perspective views showing the method of removing inserts from injection moulds according to the present invention.

### Description of a preferred embodiment

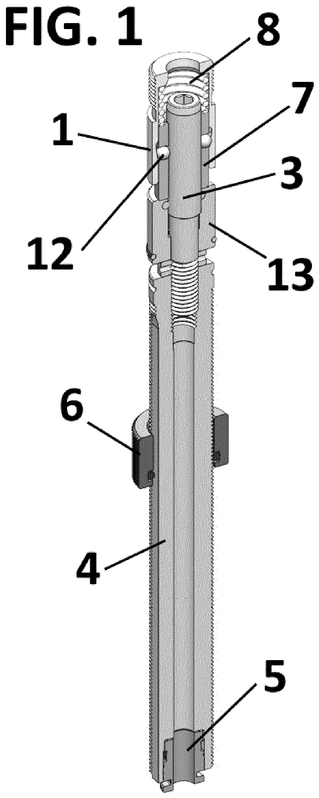

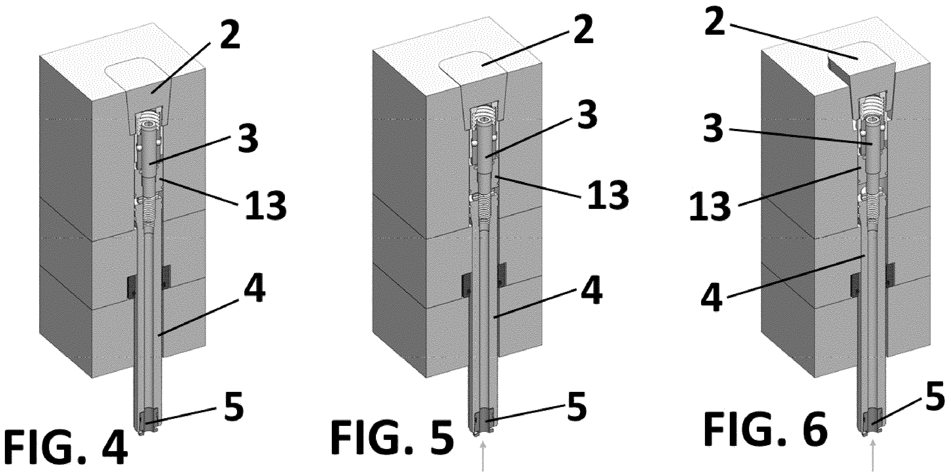

Figure 1 shows the device for removing inserts from injection moulds according to the present invention comprising a fixing sleeve (1) to which an insert (2) is fixed, not shown in figure 1, but shown in figures 4 to 9, e.g. by means of a threaded fixing.

Furthermore, the device for removing inserts from injection moulds according to the present invention also comprises a shaft (3) which is fixed to the mould by means of a rod (4), i.e. the shaft (3) and the rod (4) are connected by means of a thread. This rod (4) is hollow internally and is provided with an air inlet (5) at its end furthest from the shaft (3).

This rod (4) is also used to adjust the height of the position of the insert (2) by means of a nut (6) located around the rod (4).

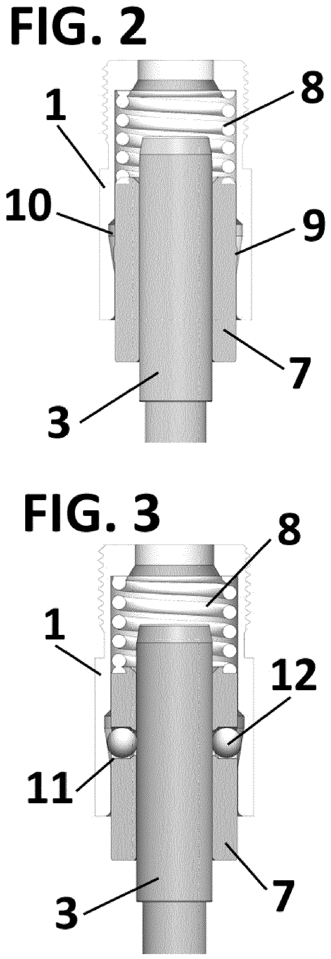

The device for removing inserts from injection moulds according to the present invention also comprises an intermediate sleeve (7) which is positioned between the fixing sleeve (1) and the shaft (3), as can best be seen in figures 2 and 3.

In addition, a spring (8) is located between the fixing sleeve (1) and the intermediate sleeve (7) which pushes the intermediate sleeve (7) towards the distal direction of the insert (2).

To prevent the separation between the fixing sleeve (1) and the intermediate sleeve (7), this intermediate sleeve (7) comprises a protrusion (9) which touches one end of a cavity (10) of the fixing sleeve (1), this cavity (10) having a width which is greater at its end proximal to the insert (2) than at its end distal to the insert (2), as can be seen in figure 2.

The intermediate sleeve (7) also comprises housings (11) for retaining elements (12), shown in Figure 3, which in the embodiment shown are spherical in shape, which retain the shaft (3) to prevent accidental removal of the assembly consisting of the fixing sleeve (1), the insert (2) and the intermediate sleeve (7).

The device for removing inserts from injection moulds according to the present invention also comprises a thrust sleeve (13) located around said shaft (3) and movable with respect to the assembly of the fixing sleeve (1) and the insert (2) by injecting air through the air inlet (5) of the rod (4), as will be explained below with reference to figures 4 to 9.

Figure 4 shows the initial position of the device for removing inserts from injection moulds according to the present invention, where the insert (2) is flush with the top of the mould.

To remove the insert (2), air is first injected through the air inlet (5) of the rod (4). The air injection causes an initial displacement of the insert (2), for example by about 2 mm in relation to the top of the mould. This first displacement is small to avoid any unwanted movement of the insert, for example, to prevent it from flying out and being lost.

When air is injected, the thrust sleeve (13) moves towards the insert (2), pushing the fixing sleeve (1) and the insert (2), which are fixed together, as explained above.

This first displacement is carried out by injecting air, so that the thrust sleeve (13) starts to push the intermediate sleeve (7), compressing the spring (8), but due to the rigidity of the spring it only compresses it slightly, for example less than 1 millimetre. Then, practically at the same moment, the spring (8) expands again, so that the whole assembly formed by the fixing sleeve (1) and the intermediate sleeve (7) is again retained, but in a slightly raised position of the insert (2), e.g., 2 millimetres.

In this position, shown in figure 5, an operator can push the insert (2) into the mould. This push causes a second displacement a greater distance than the first displacement.

This second displacement is achieved in such a way that when the insert (2) is pushed, the spring (8) compresses again, this time completely, and when it stops pushing, the spring (8) expands by its elastic force, so that the insert (2) protrudes more from the top of the mould, for example, by about 5 millimetres.

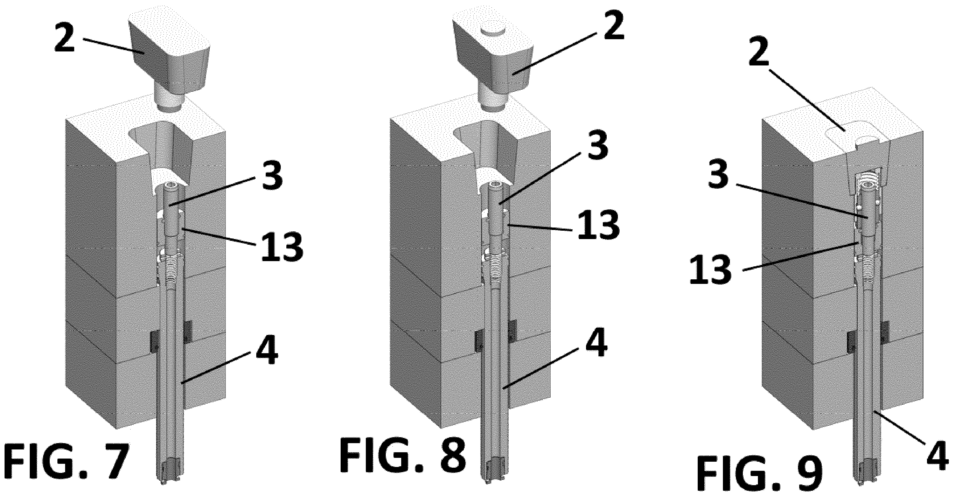

When the insert (2) is in the position, shown in figure 6, after the second displacement, this insert (2) can be removed manually by an operator, figure 7.

For example, the second displacement is about 5 millimetres, sufficient for such manual removal, which is larger than the first displacement, which is about 2 millimetres.

A new insert (2), figure 8, can then be fitted with its fixing sleeve (1), remaining in its position of use in its flush position with the upper part of the mould, as can be seen in figure 9.

When the new insert (2) is placed, it is retained in the mould in the same way as the previous insert (2), as shown in figures 2 and 3.

Although reference has been made to a specific embodiment of the invention, it is obvious to a person skilled in the art that the device and method of removing mould insert from injection moulds described are susceptible to numerous variations and modifications, and that all the details mentioned can be replaced by technically equivalent ones, without departing from the scope of protection defined by the appended claims.

## Claims

1. A device for removing mould insert from injection moulds, **characterized in that** it comprises:
- a fixing sleeve (1) to which an insert (2) is fixed;
- a shaft (3) on which the fixing sleeve (1) is removably placed;
- at least one retaining element (12) that retains the sleeve (1) on the shaft (3) in a retained position;
- a thrust sleeve (13), which is movable with respect to said shaft (3), between a retaining position of the fixing sleeve (1) and a releasing position of the fixing sleeve (1); and
- a rod (4) provided with an air inlet (5), the shaft (3) and the thrust collar (13) being movable with respect to the rod (4) when injecting air through the air inlet (5).

2. Device for removing inserts from injection moulds according to claim 1, also comprising an intermediate sleeve (7) which is arranged between the fixing sleeve (1) and the shaft (3).

3. Device for removing inserts from injection moulds according to claim 2, wherein a spring (8) is arranged between the fixing sleeve (1) and the intermediate sleeve (7), which pushes the intermediate sleeve (7) away from the insert (2).

4. Device for removing inserts from injection moulds according to claims 1 and 2, wherein said at least one retaining element (12) is housed in a housing (11) of the intermediate sleeve (7).

5. Device for removing inserts from injection moulds according to claim 1 or 4, wherein said at least one retaining element (12) is spherical in shape.

6. Device for removing inserts from injection moulds according to any one of the preceding claims, wherein the fixing sleeve (1) comprises a cavity (10), which has a width that is greater at its end proximal to the insert (2) than at its end distal to the insert (2).

7. Device for removing inserts from injection moulds according to any one of claims 2 to 4, wherein said intermediate sleeve (7) comprises a protrusion (9).

8. Device for removing inserts from injection moulds according to claims 6 and 7, wherein said protrusion (9) is housed inside said cavity (10).

9. Device for removing inserts from injection moulds according to claim 1, also comprising a nut (6) located around the rod (4).

10. A method of removing mould insert from injection moulds, **characterized in that** it comprises the following steps:
- providing an insert (2) in an injection mould, the insert (2) being fixed to a fixing sleeve (1);
- retaining said fixing sleeve (1) around a shaft (3), being said shaft (3) fixed to the mould;
- displacing the insert (2) and the fixing sleeve (1) with respect to the shaft (3) by injecting air into a rod (4) attached to the shaft (3) so that the insert (2) protrudes from the mould; and
- removing the insert (2).

11. A method of removing inserts from injection moulds according to claim 10, wherein the step of displacing the insert (2) and the fixing sleeve (1) comprises:
- displacing the insert (2) and the fixing sleeve (1) a first distance from the shaft (3);
- pressing the insert (2) towards the shaft (3); and
- displacing the insert (2) and the fixing sleeve (1) a second distance from the shaft (3), the second distance being greater than the first distance.

12. A method of removing inserts from injection moulds according to claim 11, wherein during the displacement of the insert (2) and the fixing sleeve (1) the first distance is compressed by a spring (8) located between the fixing sleeve (1) and an intermediate sleeve (7), and then the spring (8) expands, displacing the insert by this first distance, and during the displacement of the insert (2) and the fixing sleeve (1) the second distance is compressed again by the spring (8), and when the insert (2) expands, the second distance is displaced.

13. A method of removing inserts from injection moulds according to claim 11 or 12, wherein between the displacement of the insert (2) said first distance and the displacement of the insert (2) said second distance, the fixing sleeve (1) is retained around the shaft (3).
